Europäisches Patentamt

European Patent Office

Office européen des brevets

(19)

(11) **EP 1 176 541 A2**

(12) **EUROPEAN PATENT APPLICATION**

(43) Date of publication:
**30.01.2002 Bulletin 2002/05**

(51) Int Cl.⁷: **G06K 7/00**

(21) Application number: **01306442.3**

(22) Date of filing: **27.07.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.07.2000 JP 2000229629**

(71) Applicant: **NEC CORPORATION
Tokyo (JP)**

(72) Inventor: **Fukazawa, Hiroshi,
c/o NEC Micro Systems Ltd
Kawasaki-shi, Kanagawa (JP)**

(74) Representative: **Orchard, Oliver John
JOHN ORCHARD & CO. Staple Inn Buildings
North High Holborn
London WC1V 7PZ (GB)**

(54) **Card system, IC card and card reader/writer**

(57)     A card system in which a data transmitting side transmits a parity signal based upon the content of data together with the data over a signal line when the data is transmitted and received between an IC card (10) and a card reader/writer(20) for the reading or writing of the data, and a receiving side checks, based upon the content of received data and the parity signal, whether or not there is any error in the received data and transmits back to the transmitting side a data retransmission request signal requesting the transmitting side to retransmit the data when there is an error, and in which the IC card (10) corrects the level of the signal line in order to request the data transmitting side to transmit the next data when it is verified, based upon the content of the data and the parity signal which are received on the data receiving side, that there is no error in the reception of the data.

FIG . 1

**Description**

The present invention relates to a card system, an IC card and a card reader/writer for use in the card system. In a particular arrangement to be described below, by way of example, in order to enable the present invention to be understood there is a card system in which a card, such as a JAVA card, which is capable of transmitting and receiving data at a high rate is used, together with an IC card and a card reader/writer used for the card system.

Magnetic cards have been used for many cash cards and credit cards. Recently, the counterfeiting of magnetic cards has increased. Employing an IC card in lieu of a magnetic card has attracted attention. An IC card has an internal CPU for processing both encryption and decipherment, so that counterfeiting of the IC card is more difficult in comparison with the magnetic card. Much information can be stored in an IC, and many IC cards are multi-functional.

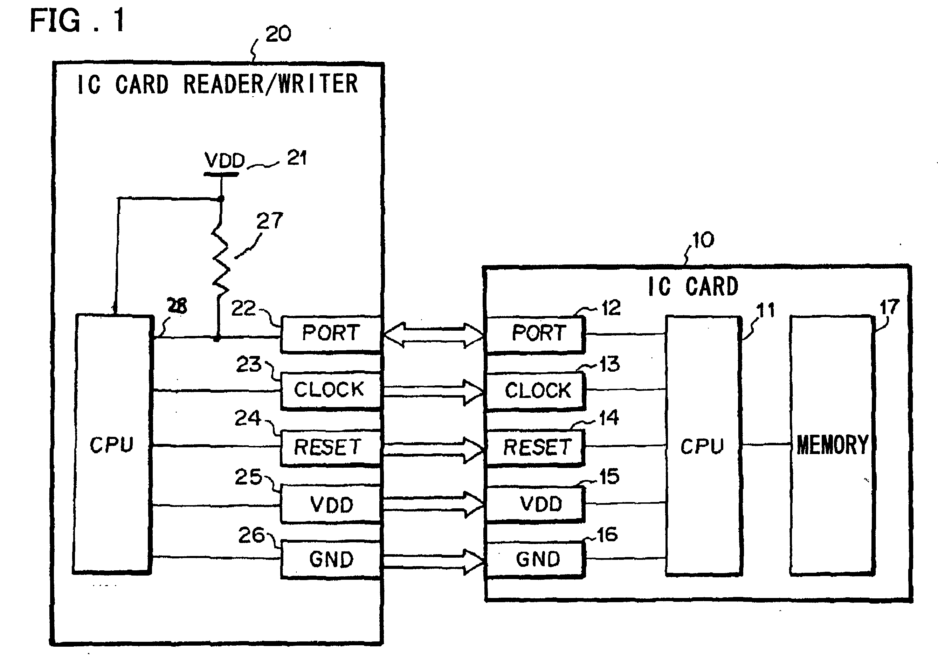

A previously proposed IC card system will now be described with reference to a block schematic diagram shown in Fig. 1 of the accompanying drawings. Fig. 1 shows an IC card 10 and an IC card reader/writer 20 for reading information from the IC card 10 and/or recording information on to the IC card 10. The IC card reader/writer 20 includes a port terminal (PORT) 22 from and to which data is input and output, a clock terminal (CLOCK) 23 for outputting a clock signal for counting the input and output timings of data, a reset terminal (RESET) 24 for outputting a reset signal which initiates the operation of a CPU 11 located in the IC card 10, a power supply terminal ($V_{DD}$) 25 for supplying power to drive the CPU 11 in the IC card 10 and a ground terminal (GND) 26.

The IC card reader/writer 20 further includes a CPU 28 for controlling various signals which are output to terminals 22 to 26, a power supply 21 for driving the CPU 28 and a pull-up resistor 27 connected between the power supply 21 and the port terminal 22. The IC card 10 has terminals 12 to 26, which correspond to the terminals 22 to 26 of the IC card reader/writer 20, respectively, and through which various signals are input to and output from the IC card 10. The IC card 10 further includes a memory 17 for storing a program for carrying out half-duplex synchronous communication and user data, and a CPU 11 for executing the program stored in the memory 17.

The term "half-duplex" used herein means a communication scheme for alternatingly transmitting data between two communication equipments to enable bi-directional communications. When one of the equipments transmits data, another equipment receives the data. Simultaneous transmission of data by both equipments is not allowed. For example, when data is output from the IC card reader/writer 20, the IC card 10 cannot output data to the IC card reader/writer 20 and only receives data from the IC card reader/writer 20.

The operation of the system shown in Fig. 1 will now be described. When the IC card 10 is coupled to the IC card reader/writer 20, power $V_{DD}$ is supplied to a main body of the IC card 10 through the power supply terminals 25, 15 in response to an instruction from the CPU 28. When the power supply terminal 25 and the ground terminals 26 are electrically connected respectively with the power supply terminal 15 and the ground terminal 16, the CPU 11 is enabled to be driven.

Thereafter, a reset signal is output from the IC card reader/writer 20 via the reset terminal 24, in accordance with an instruction from the CPU 28. Then, a reset signal is supplied to the IC card 10 via the reset terminal 14 and in turn provided to the CPU 11. This brings the CPU 11 into such a state that the CPU 11 can be initiated into operation.

Subsequently, the IC card reader/writer 20 outputs a clock signal via the clock terminal 23, in accordance with an instruction from the CPU 28. Then, the output clock is provided to the CPU 11 of the IC card 10 via the clock terminal 13. Then, the IC card reader/writer 20 outputs a data read request, and data, which is to be written into the IC card 10 via the port terminal 22 in synchronization with a clock signal, is output.

From the IC card 10, the CPU 11 reads out user data which is stored in the memory 17 to output the user data to the IC card reader/writer 20, and writes data supplied from the IC card reader/writer 20 into the memory 17 based upon the request and data which have been received by the IC card 10 in accordance with a scheme of half-duplex synchronous communication.

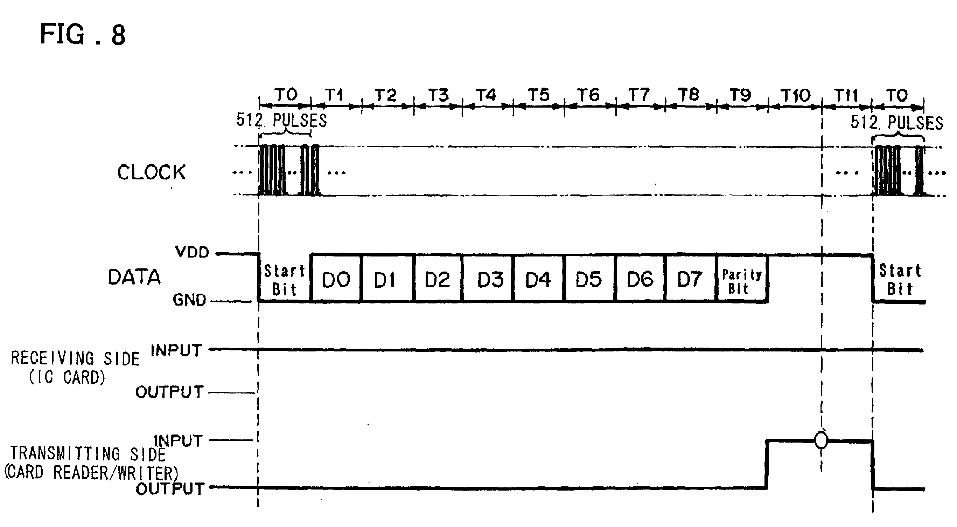

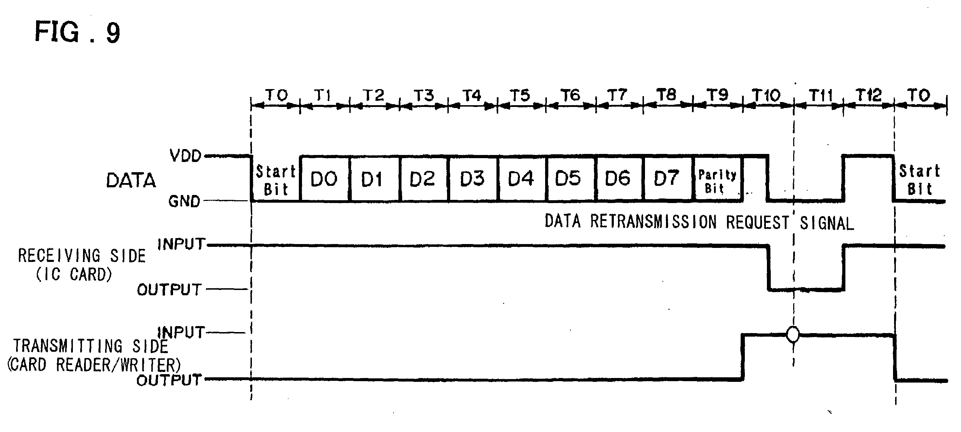

Reference will now be made to Figs. 8 and 9 of the accompanying drawings to illustrate data formats used for half-duplex synchronous communication, in which Fig. 8 illustrates the data format when data communication is being conducted normally, and Fig. 9 illustrates the data format when data communication is not normally conducted.

As shown in Fig. 8, there are transmitted between the IC card reader/writer 20 and the IC card 10 a start bit which provides notification of the transmission of data bits, data bits DO through D7 which constitute substantially transmitted and received data and a parity bit from which a check is made to establish whether the data has been correctly transferred.

When data communication has not been conducted normally as shown in Fig. 9, a data retransmission request signal is transmitted between the IC card reader/writer 20 and the IC card 10 for requesting the transmitting side to retransmit the data. In Figs. 8 and 9, the clock signal includes, for example, 512 pulses in each period. Each data being transmitted and received at a $V_{DD}$ level or a Ground level.

The IC card reader/writer 20 and IC card 10 are controlled by the CPUs 28 and 11, so that each of the IC card reader/writer 20 and IC card 10 is brought into an output mode state for transmitting data, or an input mode state for receiving data, whilst both of the IC card reader/writer 20 and IC card 10 are not brought simultaneously into the output mode state in order to carry out half-duplex data communication.

The operation of the IC card reader/writer 20 and the IC card 10 when data is transmitted normally from the IC card reader/writer 20 to the IC card 10 will now be described.

As shown in Fig. 8, the IC card reader/writer 20 which is functioning as a data transmitting side in half-duplex communication is controlled by the CPU 28 so that it is brought into the output mode in periods T0 to T9 and into the input mode in periods T10 and T11, respectively. More specifically,

(1) a start bit is transmitted at the beginning of T0.
(2) Data bits DO to D7 are transmitted at T1 to T8, respectively.
(3) At T9, a parity bit having a "0' or a "1" which is determined depending upon the data bits, is transmitted.
(4) When a data retransmission request signal is transmitted at T10 and T11, the IC card reader/writer 20 is so controlled that it is able to receive the signal.

The IC card 10 which is functioning as a data receiving side in half-duplex communication is so controlled that it is brought into the input mode at all periods T0 to T11. More specifically,

(1) a start bit is received at T0.
(2) Data bits are received at T1 to T8.
(3) A parity bit is received at T9.
(4) The IC card 10 executes a parity check with reference to the parity signal which has been received at T10, and T11. Since no error occurs, no data retransmission request signal is transmitted and information constituted by the data bits D0 to D7 is stored in the memory 17.

Thus, the IC card reader/writer 20 functioning as a data transmitting side and the IC card 10 functioning as a data receiving side are brought into the input mode at periods T10 and T11, and the port terminals 12 and 22 are fixed at a $V_{DD}$ level by the pull-up resistor 27 located in the card reader/writer 20.

When the data has not been transmitted normally from the IC card reader/writer 20 to the IC card 10, the IC card reader/writer 20, functioning as a data transmitting side, is brought into the output and input modes at periods T0 to T9 and T10 to T12, respectively, as shown in Fig. 9. More specifically,

(1) a start bit is transmitted at T0.
(2) Data bits are transmitted at T1 to T8.
(3) A parity bit is transmitted at T9.
(4) A transmitted data retransmission request signal transmitted is received at part of a period of T10, and at T11.

The IC card 10 functioning as a data receiving side is so controlled that it is brought into the input mode from period T0 to an intermediate point of T11 and at T12 and it is brought into the output mode at an intermediate point of period T10 and at T11. More specifically,

(1) a start bit is received at TO.
(2) Data bits are received at T1 to T8.
(3) A parity bit is received at T9.
(4) The IC card 10 executes a parity check with reference to the parity bit at a timing including T10.

In this case, an error occurs, and hence the data retransmission request signal is transmitted back to the IC card reader/writer 20. When the IC card reader/writer 20 receives this signal, it retransmits the data to the IC card 10.

Accordingly, at timings excluding a part of T10, and T11 the IC card reader writer 20, which functions as a data transmitting side, as well as the IC card 10 which functions as a data receiving side, are in the input mode and the port terminals 12 and 22 are fixed at the $V_{DD}$ level by the pull-up resistor 27 located in the card reader/writer 20.

By using the above-mentioned protocol, data communication is carried out between the IC card 10 and the IC card reader/writer 20.

Data communication as described above is suited for data communication at a rate such as 9600 bps. However it is not suited for a high speed data communication, the rate of which is, for example, 1228800 bps, as is adopted in a JAVA card, in view of the delayed speed of data.

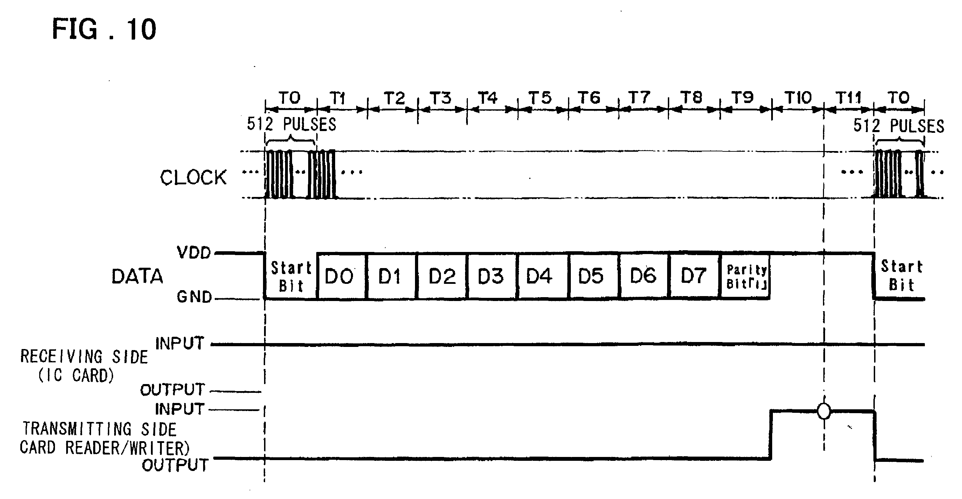

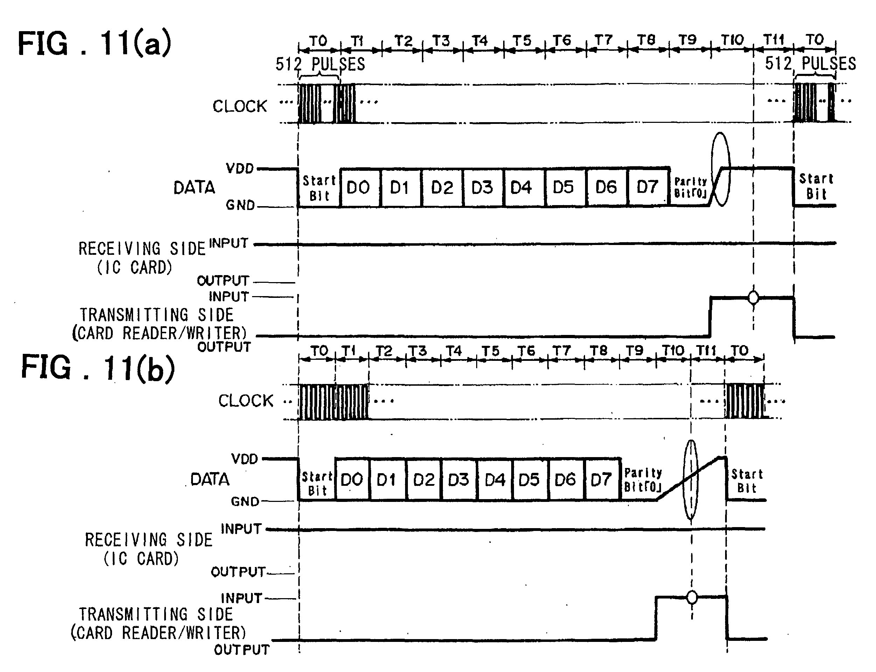

Fig. 10 of the accompanying drawings is a chart showing the timing of signals and illustrates the operation of a system in the case in which no data retransmission request signal is transmitted or received with a parity bit of "1" using the format as shown in Fig. 8 and data communication is conducted at a rate such as 1228800 bps. Fig. 11b of the accompanying drawings is a chart showing the timing of signals and illustrates the operation of a system in the case in which no data retransmission request signal is transmitted or received with a parity bit of "0" using the format as shown in Fig. 8 and data communication is conducted at a rate such as 1228800 bps. Fig. 11 a of the accompanying drawings is a chart showing the timing of signals and illustrates the operation of the system in a case in which no data retransmission request signal is transmitted or received with a parity bit of "0" using the format as shown in Fig. 8 and data communications are conducted at a rate such as 9600 bps.

The data transfer rate in Figs. 10 and 11a, that is, one period of each of T0 to T12 is, for example, 103 μ s(microsecond). A clock signal in one period comprises 512 pulses. One period of each of T0 to T12 in Fig. 11 b is, for example, 810 nS. The clock signal in one period comprises four pulses.

The data is transmitted at a $V_{DD}$ level in an interval of T9 to T11 as shown in Fig. 10 if the parity bit is "1". No problem occurs unlike the case shown in Fig. 11a. If the parity bit is "1", the data is similarly transmitted at the $V_{DD}$ level in the interval of T9 to T11, as in the case of data communication at a rate such as 9600 bps, so that no problem occurs. The reason is that a rising edge of a data pulse up to the $V_{DD}$ level is not made to become dull by the delay time of the data.

The data is transmitted via the pull-up resister 27 from the port terminal 22 at time of T10 as shown in Fig. 11 a. At this time, the rising edge of a data pulse becomes dull. However, since the data pulse reaches the $V_{DD}$ level before the data is actually input from the transmitting side, the presence or absence of an error signal can be detected accurately.

On the other hand, data may not reach the $V_{DD}$ level at T10 as well as at T11 when data communication is carried out at a high rate as shown in Fig. 11 b. This makes it difficult to detect accurately the presence or the absence of an error signal, since the data will not reach completely to the $V_{DD}$ level by the time at which the data is actually input from the transmitting side.

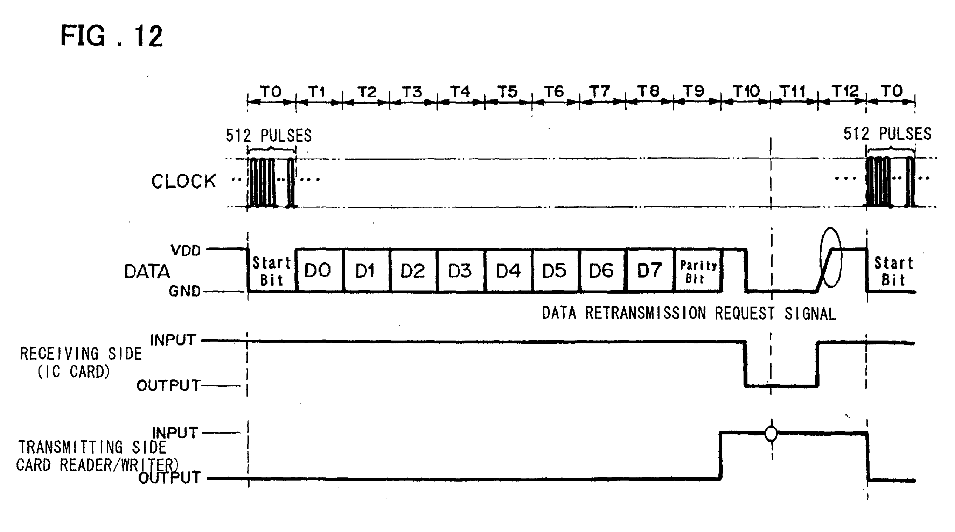

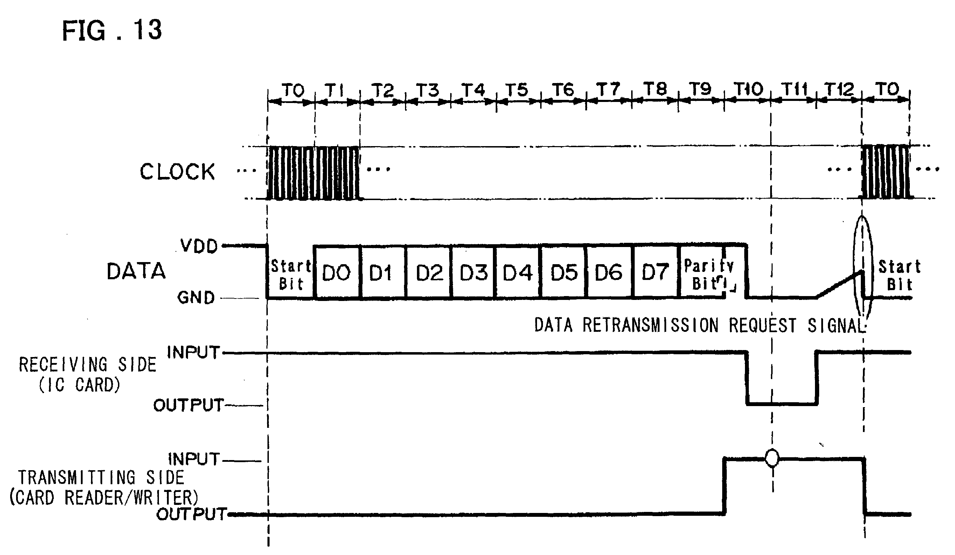

Figs. 12 and 13 of the accompanying drawings, which are charts showing the timing of signals illustrate cases shown in Fig. 9, wherein a data retransmission request signal is transmitted when a parity bit is "1". Fig. 12 shows the operation in the case in which data communication is conducted at a high rate such as 1228800 bps. The data transfer rate in Figs. 12 and 13 is the same as that in Figs. 11 a and 11 b respectively.

A data signal rises to a $V_{DD}$ level at a timing T12 in both Figs. 12 and 13. In case of Fig. 12, the data reaches the $V_{DD}$ level at TI2. On the other hand, the data does not reach the $V_{DD}$ level at TI2 in the case of Fig. 12. Accordingly, the falling edge of a start bit for the next communication is not completely formed.

The most part of the dullness in a waveform of a rising edge of a data signal is caused by a resistance element such as pull-up resistor and the like. The resistance of the pull-up resistor 27 may be increased by the frequent insertion or removal of the IC card 10 into or from the IC card reader/writer 20. The resistance may be increased also by the touch of the terminals 12 to 16 on the IC card with the fingers. Since the resistance is different due to variations among the IC card reader/writer 20, it is difficult to eliminate a dullness of a data signal waveform.

A delay time tw caused by a dullness in a waveform of a data signal is represented by a formula using natural logarithms as follows:

$$tw = -Ln\{(V_{DD}-Vth)/V_{DD}\} \times C \times R$$

wherein C denotes the capacitance of wiring and the like, R denotes the resistance of the pull-up resistor 27 and the like, and Vth denotes 0.7 x $V_{DD}$.

Assuming that C be 30 pF (a value recommended by ISO 7816), R be 20 kOhm (a value recommended by ISO 7816) and $V_{DD}$ be 5.5 V, then the tw is 720 nS(nanosecond).

At this time, the transfer rate is 103 $\mu$ S. The delay time of 720 nS of 103 $\mu$ S does not matter.

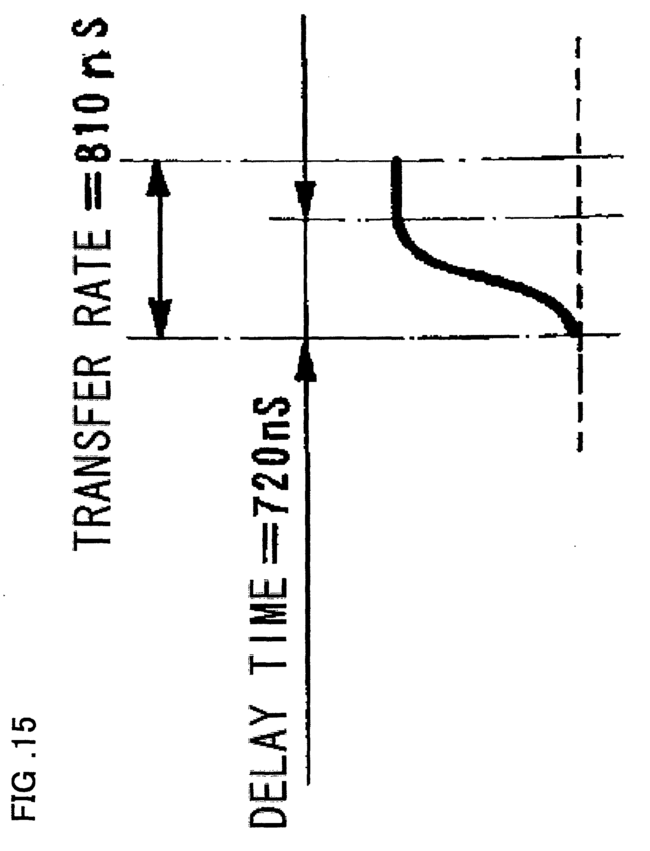

If the IC card is used at 4.91 MHz and 1228800 bps, the transfer rate of one bit is 810 nS, as shown in Fig. 15. As a result, if a delay time of 720 nS should occur, the erroneous detection of a signal, such as a data retransmitting request signal would then occur, as mentioned above.

If the resistance R is doubled due to variations among the IC card reader/writers 20 and the insertion and removal of the IC cards, then

$$tw = 1.44\mu \ S$$

so that a maximum transfer rate would be reduced to 614400 bps.

Accordingly, it is necessary to provide another IC card reader/writer, designed to carry out data communication with a device such as a JAVA card requiring high speed data communication, which is other than that for an IC card of low speed communication. However, the provision of two sets of IC card reader/writers is wasteful. It has been required that it should be made possible to carry out data communication between an off the shelf IC card reader/writer and the JAVA card, etc.

One feature of an arrangement to be described below in illustration of the present invention is that it is made possible for high rate data communication to be carried out using an off the shelf IC card reader/writer.

In one arrangement to be described below, by way of example in illustration of the present invention there is a card system in which when data is transmitted and received over a signal line between an IC card (10) and a card reader/writer(20) for the reading or writing of the data, a data transmitting side transmits a parity signal based upon the content of the data together with the data over the signal line and a data receiving side checks whether or not there is any error in the reception of data based upon the content of the data and the parity signal received in order to transmit back to the data transmitting side a data retransmission request signal for requesting the data transmitting side to retransmit the data when there is an error, and in which the IC card corrects the level of the signal line for requesting the data transmitting side to transmit the next data when it is verified that there is no error in the reception of the data based upon the content of the data and the parity signal received by the data receiving side.

In another arrangement to be described below, by way of example, in order to enable the invention to be better understood, there is a card system in which when data is transmitted and received over a signal line between an IC card (10) and a card reader/writer(20) for the reading or writing of the data, a data transmitting side transmits a parity signal based upon the content of the data together with the data over the signal line and a data receiving side checks whether or not there is any error in the reception of data based upon the content of the data and the parity signal received in order to transmit back to the data transmitting side a data retransmission request signal for requesting the data transmitting side to retransmit the data when there is an error, and in which the IC card corrects the level of the signal line for requesting the data transmitting side to retransmit the data, after the receiving side transmits the data retransmission request signal.

In another arrangement to be described in order to enable the invention to be better understood, in the case in which the IC card is at the data receiving side, the level of the signal line is corrected preferably during an interval between the reception of the parity signal and the reception of the data retransmission request signal at the data receiving side. In the case in which the IC card is at the data transmitting side, the level of the signal line is corrected preferably at a predetermined timing before the next data is transmitted.

In yet another arrangement to be described below there is an IC card (10) used for a card system in which when data is transmitted and received over a signal line between the IC card and a card reader/writer (20) for the reading or writing of the data, a data transmitting side transmits a parity signal based upon the content of the data together with the data over the signal line and a data receiving side checks whether or not there is any error in the reception of data based upon the content of the data and the parity signal received in order to transmit back to the data transmitting side a data retransmission request signal for requesting the data transmitting side to retransmit the data when there is an error, and in which the IC card corrects the level of the signal line for requesting the data transmitting side to transmit the next data when it is verified that there is no error in the reception of the data based upon the content of the data and the parity signal received by the data receiving side.

In a still further arrangement to be described below, there is an IC card (10) used for a card system in which when data is transmitted and received over a signal line between the IC card (10) and a card reader/writer(20) for the reading or writing of the data, a data transmitting side transmits a parity signal based upon the content of the data together with the data over the signal line and a data receiving side checks whether or not there is any error in the reception of data based upon the content of the data and the parity signal received in order to transmit back to the data transmitting side a data retransmission request signal for requesting the data transmitting side to retransmit the data when there is an error, and in which the IC card corrects the level of the signal line for requesting the data transmitting side to retransmit the data, after the data receiving side transmits the data retransmission request signal.

In yet a further arrangement to be described, there is a card reader/writer for transmitting and receiving data being conducted for the writing and reading of data thereto and therefrom, respectively.

The following description and drawings disclose, by means of examples, the invention which is defined in the appended claims, whose terms determine the extent of the protection conferred hereby.

In the drawings:-

Fig. 1 is a block schematic diagram for use in describing an IC card and an IC card reader/writer which reads and records information from and on the IC card, respectively,

Fig. 2 is a chart illustrating the timing of signals and showing that data having a parity bit of "0" is transmitted at a high rate (for example, 1228800 bps), resulting in there being no error in the data transmission,

Fig. 3 is a chart illustrating the timing of signals and showing that data having a parity bit of "1" is transmitted at a high rate (for example, 1228800 bps), resulting in there being an error in the data transmission,

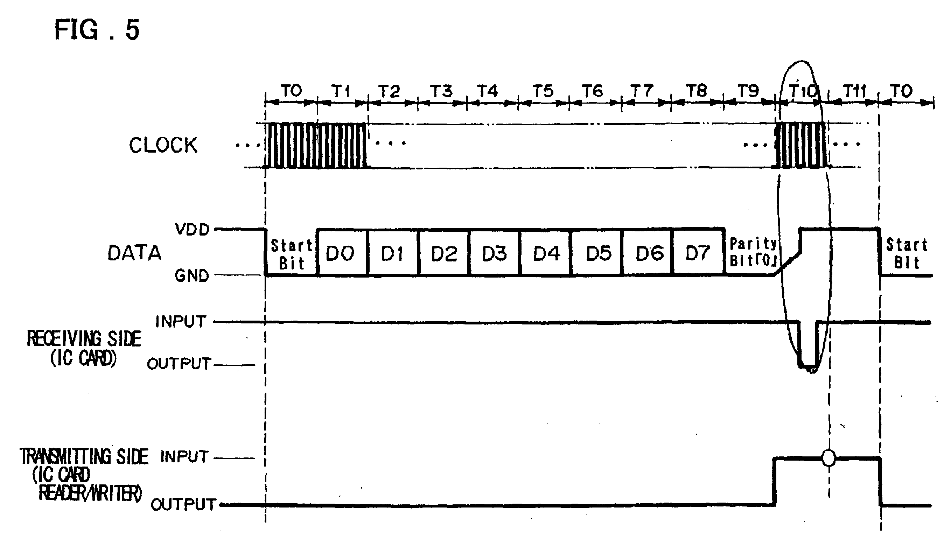

Fig. 4 consists of flow charts at (a) and (b) which show the operation of the arrangements shown in Figs. 2, 3, 5 and 6,

Fig. 5 is a chart illustrating the timing of signals and showing that the level of the signal line from CPU to power supply is corrected while the IC card is brought into the output mode for a period corresponding to two clock intervals,

Fig. 6 is a chart illustrating the timing of signals and showing that data having a parity bit of "1" is transmitted at a high rate (for example, 1228800 bps), resulting in there being no error in the data transmission,

Fig. 7 is a chart illustrating the timing of signals and showing that data having a parity bit of "1" is transmitted at a high rate (for example, 1228800 bps), resulting in there being an error in the data transmission,

Fig. 8 is a chart illustrating the timing of signals and showing the format of the data used for half-duplex synchronous communications when the data communications are normally conducted,

Fig. 9 is a chart illustrating the timing of signals and showing the format of the data used for half-duplex synchronous communications when the data communications are not normally conducted,

Fig. 10 is a chart illustrating the timing of signals and showing that no data retransmission request signal is transmitted and received with the parity bits being "I" and that the data communications are conducted at, for example, 1228800 bps,

Fig. 11 consists of charts at (a) and (b) illustrating the timing of signals and showing that no transmission and reception of the data retransmission request signal is conducted with the parity bits being "0",

Fig. 12 is a chart illustrating the timing of signals and showing that a data retransmission request signal is transmitted at a low rate (for example, 9600 bps) with the parity bits being "1",

Fig. 13 is a chart illustrating the timing of signals and showing that a data retransmission request signal is transmitted at a high rate (for example, 1228800 bps) with the parity bits being "1",

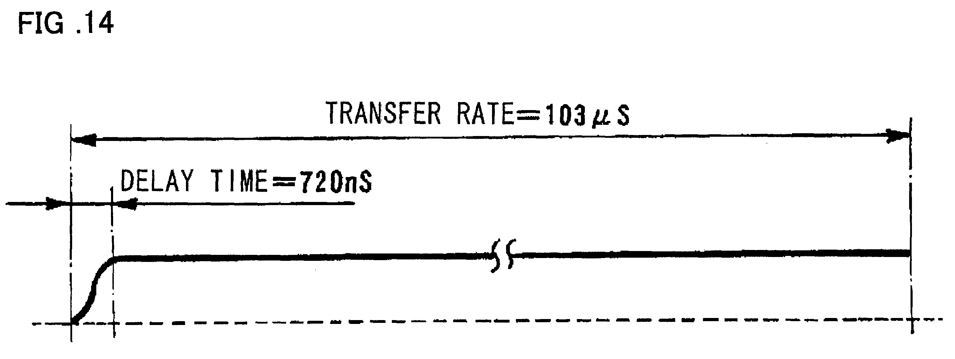

Fig. 14 is a diagram showing the data transfer rate and the delay time at a low rate, and

Fig. 15 is a diagram showing the data transfer rate and the delay time at a high rate.

Referring now to the drawings, Fig. 1 shows the structures of an IC card 10 and an IC card reader/writer 20 for reading information from the IC card 10 and/or recording information on the IC card 10. The IC card reader/writer 20 includes a port terminal (PORT) 22 via which data is input and output, a clock terminal (CLOCK) 23 for outputting a clock signal for timing the input and output of the data, a reset terminal (RESET) 24 for outputting a reset signal which initiates the driving of a CPU 11 in the IC card 10, a power supply terminal ($V_{DD}$) 25 for supplying power to drive the CPU 11 in the IC card 10 and a ground terminal (GND) 26.

The IC card reader/writer 20 further includes a CPU 28 for controlling various signals which are output to terminals 22 to 26, a power supply 21 for driving the CPU 28 and a pull-up resistor 27 between the power supply 21 and the port terminal 22. The IC card 10 has terminals 12 to 26 which correspond to the terminals 22 to 26 of the IC card reader/writer 20, respectively, through which various signals are input to and output from the IC card 10. The IC card 10 further has a memory 17 for storing programs for conducting half-duplex synchronous communication and user data and a CPU 11 for executing the programs stored in the memory 17.

The format, which has been described with reference to Figs. 11 and 12, will be used for data communication in the present arrangement being described.

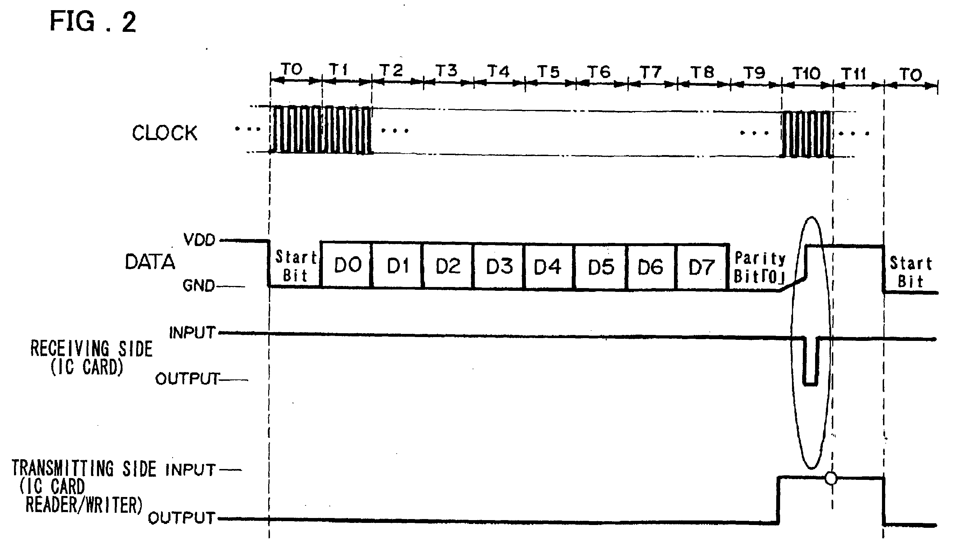

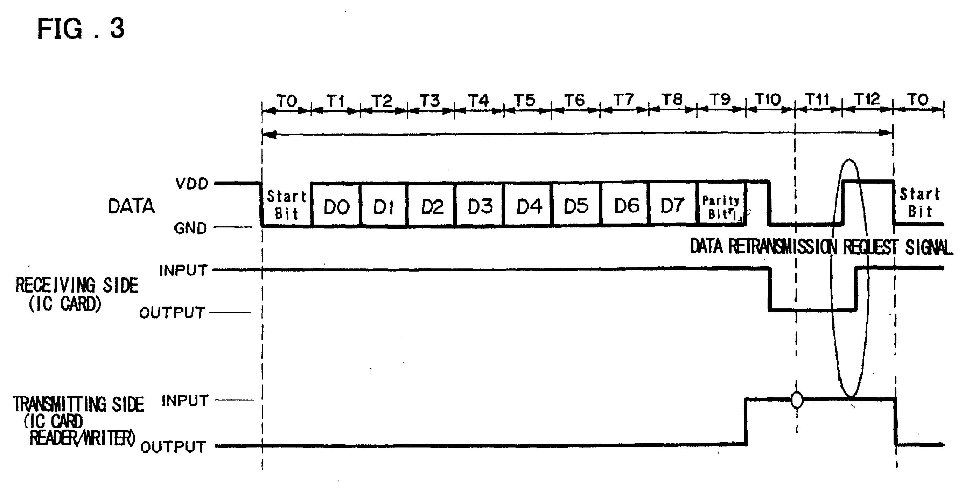

Fig. 2 illustrates the timing operations of an arrangement in the case in which data having a parity bit of "0" is transmitted at a high rate such as 1228800 bps, resulting in no error in the data transmission. Fig. 3 illustrates the timing operation of the arrangement in the case in which data having a parity bit of "1" is transmitted at a high rate (for example, 1228800 bps), resulting in an error in the data transmission. In Figs. 2 and 3, the IC card 10 is at a receiving side and the IC card reader/writer 20 is at a transmitting side, respectively. In timing charts such as those shown in Figs. 2 and 3, CLOCK and DATA illustrate timing waveforms of a clock signal and data, while INPUT and OUTPUT at a receiving side and at a transmitting side indicate the states of the sides, taking input and output modes.

If the level of data is corrected at a timing as shown in Fig. 2 (see elliptical area in Fig. 2), the detection of whether or not a data retransmission request signal has been received could be made correctly on the data transmitting side. If the level of data is corrected at a timing as shown in Fig. 3, a falling edge of a start bit for the next communication could be formed.

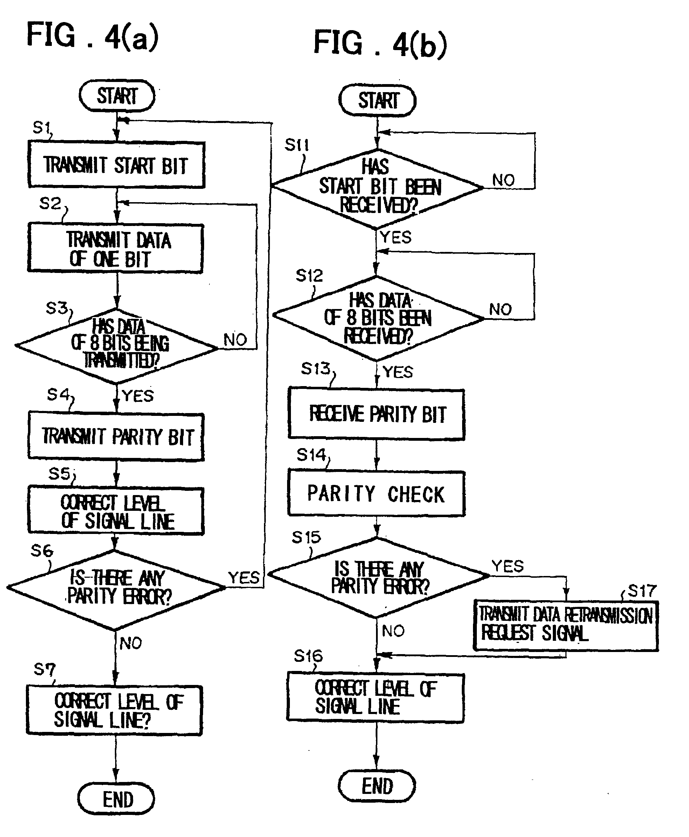

The operation of the arrangement to which Fig. 2 relates will now be described with reference to the flow chart shown in Fig. 4b. The IC card 10, which is functioning as a data receiving side checks whether or not a start bit has been received (step S11). If it is verified that the start bit has been received, the program sequence will proceed to step S12, or otherwise the program sequence repeats step S11. At step S12, it is checked whether or not 8 data bits have been received. If it is verified that 8 data bits have been received, the program sequence will proceed to step S13, or otherwise step S12 is repeated.

At step S13, a parity bit is received and the parity check is executed based upon the received parity bit (step S 14). Since there is no error in the data (step S 15), the IC card 10 is switched to an output mode in response to, for example, a third clock of T10 in accordance with the clock signal.

In order to request the transmission of the next data by changing the level of the data to a $V_{DD}$ level, the level of a signal line from the CPU 11 to the CPU 28 is corrected to a voltage level such as $V_{DD}$ (see elliptical area in Fig. 2) at step S16. The level of the signal line from CPU 11 to CPU 28 is set to the $V_{DD}$ level under the control of the CPU1 1 of the IC card 10.

Thus, the voltage level of the signal line is corrected to the $V_{DD}$ level within a period of T10, as a result of which, it can be detected that a retransmission of the data has not been requested, since the signal line level is at a $V_{DD}$ level when the data is actually input by the IC card reader/writer 20. A $V_{DD}$ level means the voltage level of a power supply voltage $V_{DD}$. In a logic system for use in a binary data communication, the $V_{DD}$ level is also termed High level while a Ground level is termed Low level.

Although the IC card is switched to an output mode in response to a third clock at T10, theoretically the level of the signal line from the CPU 11 to the CPU 28 may be changed to a level such as the $V_{DD}$ level by bringing the IC card 10 into an output mode for a period corresponding to at least one clock interval prior to T11. However, there may be such a case in which an error during the operation of data communication occurs in the IC card reader/writer 20 which is at a data transmitting side, so that the data is input before a first clock at T11.

In this case, even if the IC card 10 is switched to an output mode in for example, a fourth clock at T10, the presence/absence of a data retransmission request signal can be accurately detected. Hence, the IC card 10 is brought into an output mode in response to the third clock at T10.

Although the level of the signal line from the CPUs 11 to 28 is changed to a level such as the $V_{DD}$ level while the IC card 10 is brought into an output mode for a period corresponding to one clock interval, the signal line level may be corrected while the IC card is brought into an output mode for a period corresponding to, for example, two clock intervals.

Since both the IC card 10 and IC card reader/writer 20 are not simultaneously brought into output modes, even if the control is conducted to transmit and receive the data as shown in Fig. 2, the operation does not violate a half-duplex communication scheme.

Now, the operation relating to Fig. 3 will be described with reference to Fig. 4b. Steps 11 through 14 are executed in a similar way to those in Fig. 2. When it is verified that there is an error in the data transmission at step S15, a program sequence will proceed to step S17, at which a data retransmission request signal is transmitted for a period, for example, from a second clock at T10 to a fourth clock at T11. Then, a voltage level of the signal line from CPUs 11 to 28 is brought to a level, such as the $V_{DD}$ level, in response to a first clock at T12 (elliptical area in Fig. 3).

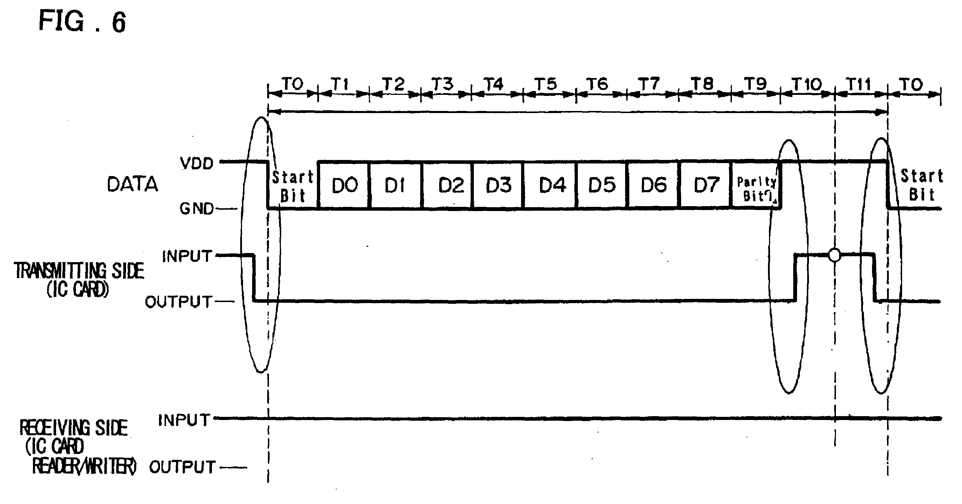

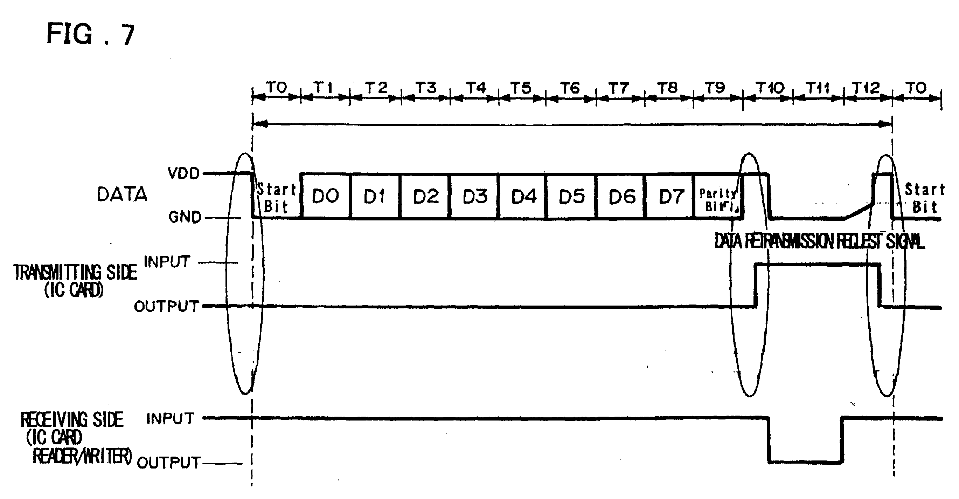

Fig. 6 illustrates the operation of the present arrangement in the case in which data having a parity bit of "1" is transmitted at a high rate such as 1228800 bps using the format shown in Fig. 10, resulting in no error in the data transmission. Fig. 7 illustrates the operation of the present arrangement in which data having a parity bit of "1" is transmitted at a high rate such as 1228800 bps using the format shown in Fig. 9, resulting in an error in the data transmission. In Figs. 6 and 7, it is assumed that the IC card 10 is at a receiving side and the IC card reader/writer 20 is at a transmitting side.

The operation in Figs. 6 and 7 will now be described with reference to the flow chart of Fig. 4a. The IC card 10 which is at the data transmitting side transmits a start bit (step S1) and then transmits data of one bit (step S2). At Step S3, a check is made to establish whether 8 data bits have been received. If it is verified that 8 data bits has been received, the program sequence will proceed to step S4, or otherwise return to step S2.

A parity bit signal is transmitted at step S4. Then, after the transmission of the parity bit signal, the IC card 10 is brought into an output mode for a period corresponding to one clock interval (first clock at T10) and the $V_{DD}$ level is maintained by correcting the level of the signal line from CPUs 11 to 28 to a level such as the $V_{DD}$ level (step S5). Then the IC card 10 is switched to the input mode in response to the second clock at T10.

Subsequently, a check is made to establish whether the data has any error (step S6). If it is verified that there is an error, a program sequence will return to step S1, and if it is verified that there is no error, the IC card 10 is switched to an output mode in response to, for example, a fourth clock at T11, so that the data is changed to the $V_{DD}$ level by correcting the level of the signal line again (step S7). If there is an error in the data, a data retransmission request signal is transmitted as shown in Fig. 7.

The IC card 10 which is a data transmitting side makes it possible to provide a sufficient timing margin to form a falling edge of a start bit for the next communication by changing the level of the signal line twice to change the data to the $V_{DD}$ level within the periods T10 and T11 irrespective of the presence or absence of the data transmission. The purpose of correcting the level of the signal line within T10 is to bring the data to the $V_{DD}$ level by the first clock at T11 if a parity bit is "0", in a similar way to the correction at the step S16 in Fig. 4b.

The meritorious effects of the arrangements described may be summarized as follows. Since the IC card corrects the level of the signal line for transmitting data towards a data transmitting side after a data receiving side transmits a data retransmission request signal, it is possible to transmit and receive the data retransmission request signal while data is at, for example, the $V_{DD}$ level. Erroneous reception of this signal can be minimised.

It will be noted that in particular illustrative arrangements described, since after a data receiving side transmits a data retransmission request signal, and the IC card corrects the level of the signal line for transmitting data which has not been completely transmitted and received, to a data transmitter, it is possible to transmit that data again.

It will be appreciated that, although particular illustrative arrangements have been described, as examples, in order to enable the invention to be better understood, variations and modifications thereof, as well as other arrangements, may be conceived within the scope of the appended claims.

Also it should be noted that combinations of the disclosed and/or claimed elements, matters and/or items may fall within the scope of the aforementioned modifications.

## Claims

1. A card system including an IC card (10) and a card reader/writer (20) in which when data is transmitted and received over a signal line between the IC card (10) and the card reader/writer(20) for the reading or writing of the data, a data transmitting side transmits a parity signal based upon the content of the data together with the data over the signal line and a data receiving side checks whether or not there is any error in the reception of the data based upon the content of the data and the parity signal received in order to transmit back to the data transmitting side a data retransmission request signal for requesting the data transmitting side to retransmit the data when there is an error, and in which the IC card (10) corrects the level of the signal line for requesting the data transmitting side to transmit the next data when it is verified that there is no error in the reception of the data based upon the content of the data and the parity signal received by the data receiving side.

2. A card system including an IC card (10) and a card reader/writer (20) in which when data is transmitted and received over a signal line between the IC card (10) and the card reader/writer(20) for the reading or writing of the data, a data transmitting side transmits a parity signal based upon the content of the data together with the data over the signal line and a data receiving side checks whether or not there is any error in the reception of data based upon the content of the data and the parity signal received in order to transmit back to the data transmitting side a data retransmission request signal for requesting the data transmitting side to retransmit the data when there is an error, and in which the IC card (10) corrects the level of the signal line for requesting the data transmitting side to retransmit the data, after the receiving side transmits the data retransmission request signal.

3. A card system as claimed in claim 1, in which in the case in which the IC card (10) is at the data receiving side, the level of the signal line is corrected during an interval between the reception of the parity signal to the reception of the data retransmission request signal at the data receiving side.

4. A card system as claimed in claim 2, in which in the case in which the IC card (10) is at the data transmitting side, the level of the signal line is corrected at a predetermined time before the next data is transmitted.

5. An IC card (10) for use in a card system wherein when data is transmitted and received over a signal line between the IC card (10) and a card reader/writer(20) for the reading or writing of data, a data transmitting side transmits a parity signal based upon the content of the data together with the data over the signal line and a data receiving side checks whether or not there is any error in the reception of the data based upon the content of the data and the parity signal received in order to transmit back to the data transmitting side a data retransmission request signal for requesting the data transmitting side to retransmit the data when there is an error, and wherein the IC card (10) corrects the level of the signal line for requesting the data transmitting side to transmit the next data when it is verified that there is no error in the reception of the data based upon content of the data and the parity signal received by the data receiving side.

6. An IC card (10) for use in a card system wherein when data is transmitted and received over a signal line between the IC card (10) and a card reader/writer(20) for the reading or writing of data, a data transmitting side transmits a parity signal based upon the content of the data together with the data over the signal line and a data receiving side checks whether or not there is any error in the reception of data based upon the content of the data and the parity signal received in order to transmit back to the data transmitting side a data retransmission request signal for requesting the data transmitting side to retransmit the data when there is an error, and wherein the IC card (10) corrects the level of the signal line for requesting the data transmitting side to retransmit the data, after the receiving side transmits the data retransmission request signal.

7. A card reader/writer (20) in which data is transmitted and received by the card reader/writer (20) for writing and reading the data to and from the IC card as claimed in claim 5 or claim 6.

8. A card system including an IC card (10) and a card reader/writer (20) wherein the IC card (10) has at least a CPU(11), a memory(17) for storing a program and/or data, a port terminal(12) for data input and output, a terminal(13) for receiving a clock signal, and a plurality of power supply terminals (15,16), each of the terminals being connected to a corresponding terminal of a plurality of terminals of the CPU(11), and the card reader/writer(20) has at least a CPU(28), a port terminal(22) for data input and output, a terminal(23) for providing a clock signal, and a plurality of power supply terminals(25,26) for supplying power and ground, each of the terminals being connected to a corresponding terminal of a plurality of terminals of the CPU(28), whilst each of terminals of the IC card (10) is electrically connected to a corresponding terminal of the card reader/writer(20) when the IC card (10) is mounted on the card reader/writer(20), wherein a data transmitting side, being one of the IC card (10) and the card reader/writer(20), transmits data including a series of data bits accompanied by an error check code over a signal line arranged between the CPU (11) of the IC card (10) and the CPU(28) of the card reader/writer(20) through the port terminals(12,22) of the IC card and the card reader/writer, the error check code being calculated based on content of the data bits, and wherein a data receiving side, being another of the IC card (10) and the card reader/writer(20), checks for an error in data received by calculating an error check code based upon the content of the data bits received and comparing the calculated error check code with an error check code received in order to transmit back to the data transmitting side a data retransmission request signal asking the data transmitting side to retransmit the data when the error is detected, and wherein the IC card (10) corrects the level of the signal line to a predetermined voltage level, when it is verified by the data receiving side that there is no error in the reception of the data based upon the error check code, the correction of the level of the signal line causing the data transmitting side to detect that a data retransmission request signal is not transmitted at the time of inputting the next data to the signal line by the data transmitting side.

9. A card system as claimed in claim 8, in which the IC card (10) corrects the level of the signal line after the data receiving side transmits the data retransmission request signal to request the data transmitting side to retransmit the data.

10. A card system as claimed in claim 8 or claim 9, in which the IC card (10) corrects the level of the signal line during an interval between the reception of the parity signal to the reception of the data retransmission request signal by the data receiving side in the case in which the IC card is at the data receiving side.

11. A card system as claimed in any one of claims 8 to 10, in which the IC card (10) corrects the level of the signal line at a predetermined time before the next data is transmitted in the case in which the IC card is at the data transmitting side.

12. A card system as claimed in any one of claims 8 to 11, in which the error check code is made up of a parity bit.

13. A card system as claimed in any one of claims 8 to 12, in which a start bit is transmitted on the signal line ahead of the data bits from the data transmitting side.

# FIG . 1

IC CARD READER/WRITER  20

VDD  21

27

28  22  PORT ⟷ PORT  12

IC CARD  10

23  CLOCK ⟹ CLOCK  13

24  RESET ⟹ RESET  14

CPU  25  VDD ⟹ VDD  15  CPU  11  MEMORY  17

26  GND ⟹ GND  16

EP 1 176 541 A2

# FIG. 2

CLOCK

DATA

RECEIVING SIDE
(IC CARD)

TRANSMITTING SIDE INPUT
(IC CARD
READER/WRITER) OUTPUT

EP 1 176 541 A2

# FIG . 3

DATA RETRANSMISSION REQUEST SIGNAL

EP 1 176 541 A2

# FIG . 4(a)

```
        ( START )
  S1
  ┌─────────────────────┐
  │  TRANSMIT START BIT  │
  └─────────────────────┘
  S2
  ┌─────────────────────┐
  │    TRANSMIT DATA     │
  │     OF ONE BIT       │
  └─────────────────────┘
  S3
       ╱ HAS DATA ╲
      ╱  OF 8 BITS BEING ╲ ──NO──┐
      ╲ TRANSMITTED? ╱          │
       ╲         ╱               │
          │ YES                  │
  S4                             │
  ┌─────────────────────┐        │
  │ TRANSMIT PARITY BIT │        │
  └─────────────────────┘        │
  S5                             │
  ┌─────────────────────┐        │
  │    CORRECT LEVEL     │        │
  │   OF SIGNAL LINE     │        │
  └─────────────────────┘        │
  S6                             │
       ╱ IS THERE ANY ╲ ──YES────┘
       ╲ PARITY ERROR? ╱
          │ NO
  S7
  ┌─────────────────────┐
  │  CORRECT LEVEL OF    │
  │   SIGNAL LINE?       │
  └─────────────────────┘
          │
        ( END )
```

# FIG . 4(b)

```
        ( START )
  S11
       ╱   HAS   ╲
      ╱ START BIT BEEN ╲ ──NO──┐
      ╲ RECEIVED? ╱            │
       ╲        ╱              │
          │ YES                │
  S12                          │
       ╱ HAS DATA ╲            │
      ╱ OF 8 BITS BEEN ╲ ──NO──┘
      ╲ RECEIVED? ╱
       ╲       ╱
          │ YES
  S13
  ┌─────────────────────┐
  │  RECEIVE PARITY BIT  │
  └─────────────────────┘
  S14
  ┌─────────────────────┐
  │    PARITY  CHECK     │
  └─────────────────────┘
  S15
       ╱ IS THERE ANY ╲ ──YES──┐
       ╲ PARITY ERROR? ╱       │
          │ NO               S17
          │          ┌──────────────────────────┐
          │          │ TRANSMIT DATA RETRANSMISSION │
          │          │      REQUEST SIGNAL        │
          │          └──────────────────────────┘
  S16                        │
  ┌─────────────────────┐◄───┘
  │  CORRECT LEVEL OF    │
  │    SIGNAL LINE       │
  └─────────────────────┘
          │
        ( END )
```

# FIG . 5

EP 1 176 541 A2

# FIG . 6

EP 1 176 541 A2

# FIG . 7

DATA RETRANSMISSION REQUEST SIGNAL

EP 1 176 541 A2

# FIG . 8

CLOCK

DATA

RECEIVING SIDE (IC CARD)

TRANSMITTING SIDE (CARD READER/WRITER)

512 PULSES

T0 T1 T2 T3 T4 T5 T6 T7 T8 T9 T10 T11 T0

Start Bit | D0 | D1 | D2 | D3 | D4 | D5 | D6 | D7 | Parity Bit | Start Bit

INPUT
OUTPUT

INPUT
OUTPUT

EP 1 176 541 A2

FIG . 9

DATA

VDD

GND

RECEIVING SIDE
(IC CARD)

INPUT

OUTPUT

TRANSMITTING SIDE
(CARD READER/WRITER)

INPUT

OUTPUT

DATA RETRANSMISSION REQUEST SIGNAL

Start Bit | D0 | D1 | D2 | D3 | D4 | D5 | D6 | D7 | Parity Bit

Start Bit

T0 T1 T2 T3 T4 T5 T6 T7 T8 T9 T10 T11 T12 T0

18

# FIG . 10

CLOCK

DATA

RECEIVING SIDE
(IC CARD)

TRANSMITTING SIDE
CARD READER/WRITER)

EP 1 176 541 A2

# FIG . 11(a)

CLOCK

512 PULSES · · · 512 PULSES

| T0 | T1 | T2 | T3 | T4 | T5 | T6 | T7 | T8 | T9 | T10 | T11 | T0 |

DATA

VDD

| Start Bit | D0 | D1 | D2 | D3 | D4 | D5 | D6 | D7 | Parity Bit[0] | | | Start Bit |

GND

RECEIVING SIDE (IC CARD)

INPUT

OUTPUT

TRANSMITTING SIDE (CARD READER/WRITER)

INPUT

OUTPUT

# FIG . 11(b)

CLOCK

| T0 | T1 | T2 | T3 | T4 | T5 | T6 | T7 | T8 | T9 | T10 | T11 | T0 |

DATA

VDD

| Start Bit | D0 | D1 | D2 | D3 | D4 | D5 | D6 | D7 | Parity Bit[0] | | Start Bit |

GND

RECEIVING SIDE (IC CARD)

INPUT

OUTPUT

TRANSMITTING SIDE (CARD READER/WRITER)

INPUT

OUTPUT

EP 1 176 541 A2

# FIG . 12

EP 1 176 541 A2

# FIG . 13

EP 1 176 541 A2

# FIG .14

TRANSFER RATE=103 $\mu$ S

DELAY TIME=720nS

FIG .15

TRANSFER RATE =810 nS

DELAY TIME =720nS